# EUROPÄISCHE PATENTANMELDUNG

(11) **EP 3 721 998 A1**
(43) Veröffentlichungstag der Anmeldung: **14.10.2020**
(21) Anmeldenummer: 19168303.6
(22) Anmeldetag: 10.04.2019
(51) Int. Cl.: B01J 39/04, B01J 39/20, B01J 39/26, B01J 41/04, B01J 41/14, B01J 41/20

(54) **VERFAHREN ZUR ERZEUGUNG EINER HYDROPHILEN OBERFLÄCHE AUF PS/DVB COPOLYMERPARTIKELN**

(71) Anmelder: Philipps-Universität Marburg, 35032 Marburg (DE)
(72) Erfinder: Seubert, Andreas, 35043 Marburg (DE); Tripp, Jonathan Sebastian, 35037 Marburg (DE); Aeschlimann, Rudolf, 9107 Urnäsch (CH); Ott, Michael, 8478 Thalheim an der Thur (CH)
(74) Vertreter: Hepp Wenger Ryffel AG

(57) **Zusammenfassung**

Die vorliegende Erfindung betrifft ein Verfahren zur Modifizierung eines Polymerträgermaterials für die Verwendung als stationäre Phase in einem analytischen oder präparativen Trennverfahren wobei das Verfahren die Schritte umfasst: Bereitstellen eines Polymerträgermaterials wenigstens teilweise gebildet aus aromatischen Kohlenwasserstoffverbindungen aufweisend mindestens zwei Vinyl- oder Allyl-Substituenten; Erzeugung von Hydroxygruppen auf/im Polymerträgermaterial durch ein Verfahren umfassend eine oxidative Behandlung des Polymerträgermaterials und eine anschliessende reduktive oder hydrolytische Behandlung des Reaktionsproduktes; Reaktion des Produkts aus dem vorherigen Schritt mit einer polyfunktionalen Verbindung. Die Erfindung betrifft weiter ein Polymerträgermaterial für die Verwendung als stationäre Phase in einem analytischen oder präparativen Trennverfahren, insbesondere Chromatographieverfahren, hergestellt nach einem erfindungsgemässen Verfahren.

## Beschreibung

Die vorliegende Erfindung betrifft ein Verfahren zur Modifizierung eines Polymerträgermaterials für die Verwendung als stationäre Phase in einem analytischen oder präparativen Trennverfahren, wobei das Verfahren die Schritte umfasst: Bereitstellen eines Polymerträgermaterials wenigstens teilweise gebildet aus aromatischen Kohlenwasserstoffverbindungen aufweisend mindestens zwei Vinyl- oder Allyl-Substituenten; Erzeugung von Hydroxygruppen auf/im Polymerträgermaterial durch ein Verfahren umfassend eine oxidative Behandlung des Polymerträgermaterials und eine anschliessende reduktive oder hydrolytische Behandlung des Reaktionsproduktes; Reaktion des Produkts aus dem vorherigen Schritt mit einer polyfunktionalen Verbindung. Die Erfindung betrifft weiter ein Polymerträgermaterial für die Verwendung als stationäre Phase in einem analytischen oder präparativen Trennverfahren, insbesondere Chromatographieverfahren, hergestellt nach einem erfindungsgemässen Verfahren.

Ionenaustauscher sind in der Regel aus partikulären Materialen aufgebaut, welche an ihrer Oberfläche Ladungen tragen, die sie zur Retention von Ionen befähigen. Bei Anionenaustauschern handelt es sich dabei häufig um kationische Ammoniumverbindungen, wobei aber auch Phosphonium- und Arsoniumionen bekannt sind. Die Austauschergruppe ist monokationisch. Bei rein elektrostatischen Wechselwirkungen wird die Retentionszeit durch das Coulombsche Gesetz bestimmt. Demnach sollte sich nur die Ladung des retardierten Anions auf die Retentionszeit desselbigen auswirken.

Bei der Ionenchromatographie in wässriger Lösung lassen sich jedoch weitere Faktoren feststellen, die sich auf das Retentionsverhalten auswirken, beispielsweise die Hydratation des Anions und die Hydratation der Austauschergruppe. Weiter spielt auch die Polarisierbarkeit der beteiligten Ionen und schwächere, sekundäre Wechselwirkungen zwischen den Analyten und dem Austauschersubstrat eine Rolle. Da die Hydrophilie des Grundpolymers, welches die Austauschergruppe trägt, sich auch auf die Hydratisierung der selbigen auswirkt, lässt sich über eine Modifikation des Trägermaterials das Retentionsverhalten des Ionentaustauschers bei gleicher Austauschergruppe verändern. Auch die direkten Substituenten der kationischen Gruppe üben einen Einfluss auf das Retentionsverhalten aus.

Im Stand der Technik finden sich bereits Ansätze zum Einstellen der Hydrophilie eines Partikels für Ionenaustauschchromatographie. Dabei werden punktuell auch andere wünschenswerte Parameter wie ausgewogene Kapazität, hohe theoretische Bodenzahl oder chemische Inertheit des Ionenaustauschmaterials diskutiert.

In US20050181224 werden auf einem sulfonierten hydrophilen Trägerpartikel durch zyklische Reaktion von Diepoxiden und Aminen sich quervernetzende Schichten aufgebracht, welche die Austauschergruppen enthalten. Mit jedem Zyklus steigt die Kapazität des Ionenaustauschers. Hydrophilie ist grundsätzlich zwar gewährleistet. Durch die abwechselnde Epoxid-/Amin-Chemie kann aber nicht unabhängig von der Kapazität zusätzliche Hydrophilie gewonnen werden.

In EP 3248678 wird ein poröser Divinylbenzene-Partikel mit modifizierten Polysacchariden beschichtet (Agarose umgesetzt mit Glycidyl-Phenylether) und das modifizierte Polysaccharid wird anschliessend mit einem polyfunktionalen Vernetzungsmittel (z.B. Ethylen-Glycol-Diglycidylether) vernetzt, sodass sich ein Makromolekül aufweisend Hydroxyl-Gruppen an der Oberfläche bildet. Danach wird das Substrat mit Diethylaminoethylchlorid Hydrochlorid gesetzt um die eigentliche Ionenaustauschergruppe zu erhalten. Die Anmeldung strebt ebenfalls einen hydrophilen Ionenaustauschpartikel mit erhöhter Stabilität (rupture strength) an. Aufgrund der reinen Adsorptions-Kräfte, welche zwischen dem Partikel und der zunächst Gel-artigen Beschichtung wirken, erweist sich das Substrat auch als weniger stabil.

EP1217012 geht von einem hydrophoben Vinylalkoholester-Polymer aus. Zunächst werden die enthaltenen Ester hydrolysiert, sodass Alkoholgruppen freigesetzt werden. Das Polymer wird hydrophil. Die OH-Gruppen werden mit einem Diepoxid und anschliessend einem Amin umgesetzt, um das Substrat zu beschichten. Die Hydrophilie liesse sich weiter steigern, indem das Basispolymer im ersten Schritt einer umfassenderen Hydrolyse unterzogen würde. Dadurch würde der Partikel aber an mechanischer Stabilität einbüssen. Unerwünschtes Quellverhalten kann auftreten.

In einer Publikation von Çaglayan et al (J Sep Sci 2006, 29. 940) wird versucht, einige der genannten Parameter wie theoretische Bodenzahl, Porengrösse und Oberflächenausdehnung durch Verwendung eines Partikelsubstrates aus Poly(vinyl acetate-codivinylbenzene) verschiedener Zusammensetzung zu optimieren. Gemäss der Druckschrift führt ein erhöhter Anteil von Vinylacetat - und damit ein erhöhter Anteil von OH-Gruppen im hydrolysierten Partikel - zu stark ansteigendem Rücklaufdruck, wenn die mit dem Substrat gepackte Säule einer erhöhten Flussrate ausgesetzt wird. Dieser unerwünschte Rücklaufdruck wird der fehlenden mechanischen Stabilität der Partikel, welche sich während des Trennverfahrens deformieren, zugeschrieben.

Es ist die Aufgabe der vorliegenden Erfindung, die oben genannten Nachteile im Stand der Technik zu überwinden. Es fehlt derzeit an einer Methode, nach welcher ein Polymersubstrat so beschichtet werden kann, dass die Hydrophilie der Polymerträgermaterialoberfläche unabhängig vom Sauerstoffanteil im Polymerkernsubstrat eingestellt werden kann und ein mechanisch stabiler und robuster Partikel resultiert. Gleichzeitig soll ein darauf basierendes Ionenaustauschsubstrat chemisch weitgehend inert sein und es sollen Hydrophilie und Kapazität bzw. Selektivität und Kapazität unabhängig voneinander konfigurierbar sein.

Diese Aufgabe wird durch ein Verfahren gelöst, welches die Merkmale von Anspruch 1 aufweist. Es handelt sich um ein Verfahren zur Modifizierung eines Polymerträgermaterials für die Verwendung als stationäre Phase in einem analytischen oder präparativen Trennverfahren. Die Erfindung betrifft weiter ein Polymerträgermaterial für die Verwendung als stationäre Phase in einem analytischen oder präparativen Trennverfahren, insbesondere Chromatographieverfahren, hergestellt nach einem erfindungsgemässen Verfahren. Die Erfindung betrifft eine Chromatographiesäule befüllt mit dem erfindungsgemässen Polymerträgermaterial, ein Verfahren zur Trennung von Analyten unter Verwendung des erfindungsgemässen Polymerträgermaterials sowie die Verwendung von erfindungsgemässem Polymerträgermaterial zur analytischen und präparativen Trennung von Analyten.

Das Verfahren umfasst die Schritte: Bereitstellen eines Polymerträgermaterials wenigstens teilweise gebildet aus aromatischen Kohlenwasserstoffverbindungen aufweisend mindestens zwei Vinyl- oder Allyl-Substituenten, bevorzugt wenigstens teilweise gebildet aus Divinylbenzol-Monomeren (Schritt a); Erzeugung von Hydroxygruppen auf/im Polymerträgermaterial durch ein Verfahren umfassend die Schritte: Oxidative Behandlung des Polymerträgermaterials (Schritt b.1); anschliessende reduktive oder hydrolytische Behandlung des Reaktionsproduktes aus Schritt b.1 (Schritt b.2); Reaktion des Produkts aus Schritt b.2. mit einer polyfunktionalen Verbindung, insbesondere einer Verbindung, die wenigstens eine erste funktionelle Gruppe, die mit Hydroxygruppen reaktiv ist, bevorzugt eine Halogengruppe, und wenigstens eine zweite funktionelle Gruppe, die mit Aminen und/oder Hydroxygruppen reaktiv ist, bevorzugt eine Epoxidgruppe, aufweist (Schritt c).

Es versteht sich von selbst, dass eine mit Aminen reaktive funktionelle Gruppe gleichzeitig auch mit anderen elementorganischen Verbindungen der 5. Hauptgruppe, namentlich mit Arsinen oder Phosphinen, reaktiv ist oder reaktiv sein kann.

Wie im Folgenden insbesondere in Bezug auf das erfindungsgemässe Verfahren noch näher erläutert wird, wirken sich die erfindungsgemässen Schritte auf den Sauerstoffgehalt an der Polymerträgermaterialoberfläche aus. Die Hydrophilie der Polymerträgermaterialoberfläche ist damit unabhängig vom Sauerstoffanteil im Polymerträgerkernsubstrat.

Der Sauerstoffgehalt an der Oberfläche des Polymerträgermaterials wird durch die initiale Oxidation und Reduktion oder Hydrolyse erhöht. Durch die Modifizierung können auch Sauerstoffatome auf/in einem Kern-Polymerträgermaterial, das keinen nachweisbaren Sauerstoffanteil aufweist, originär erzeugt werden. Der erhöhte Sauerstoffanteil beeinflusst Art und Ausprägung sekundärer Wechselwirkungen, insbesondere die Hydrophilie des resultierenden Polymerträgermaterials. Durch eine Reihe von Schritten, welche auf die initiale Oxidation und Reduktion / Hydrolyse folgen, kann zudem die Kapazität unabhängig vom Sauerstoffgehalt an der Oberfläche eingestellt werden.

Unter Oberfläche des Polymerträgermaterials oder Polymerträgermaterialoberfläche ist hier insbesondere die durch Lösung kontaktierbare Aussenfläche der Polymerträgermaterialstruktur sowie die unmittelbar an diese Aussenfläche angrenzende Schicht von 1 bis 30nm zu verstehen, wobei die durch Lösung kontaktierbare Aussenfläche teilweise auf Mikrostrukturen von zum Beispiel porösen Gebilden gelegen sein kann. Insbesondere ist die durch Lösung kontaktierbare Aussenfläche von Polymerträgermaterialpartikeln von poröser oder nicht-poröser Struktur gemeint.

Einen ersten Beitrag zur chemischen und mechanischen Stabilität leistet die kovalente Bindung zwischen dem Polymerträgermaterial und der Beschichtung. Diese steht in Kontrast zur Situation bei Latex-basierten Ionenaustauschern, bei denen rein elektrostatische Wechselwirkungen die Latex-Körner, und damit die Austauschergruppen, am Substrat halten. Hohe chemische Inertheit ist aufgrund der kovalenten Bindung ebenfalls gewährleistet. Einen zweiten Beitrag zur mechanischen Stabilität leistet der Umstand, dass das Kern-Polymerträgermaterial wenigstens teilweise aus aromatischen Kohlenwasserstoffverbindungen aufweisend mindestens zwei Vinyl- oder Allyl-Substituenten, bevorzugt wenigstens teilweise aus Divinylbenzol-Monomeren, gebildet ist. Die Stabilität dieses Kern-Polymerträgermaterials wird durch die Schritte b.1 und b.2 nicht beeinträchtigt. Das Kern-Polymerträgermaterial ist bevorzugt monodispers.

Im Folgenden wird insbesondere die Herstellung von Ionenaustauschmaterial für die Verwendung in Anionenaustauschchromatographie oder Kationenaustauschchromatographie basierend auf dem erfindungsgemäss modifizierten Polymerträgermaterial beschrieben. Die Verwendung der Partikel ist aber keinesfalls darauf beschränkt. Die Partikel lassen sich auch in anderen analytischen und präparativen Trennverfahren einsetzen, etwa in anderen Adsorptions-Chromatographieverfahren, HILIC Chromatographie (hydrophilic interaction liquid chromatography), Umkehrphasenchromatographie, Festphasenextraktion, etc.

In einer bevorzugten Ausführungsform umfasst das Verfahren weitere auf Schritt c folgende Schritte, nämlich die Durchführung einer Anzahl Beschichtungszyklen (Schritt d). Ein einzelner Beschichtungszyklus, Schritt d, umfasst: Das Einführen oder Erzeugen von Hydroxygruppen durch Reaktion der zweiten funktionellen Gruppe, die mit Aminen und/oder Hydroxygruppen reaktiv ist, bevorzugt der Epoxidgruppe, eingeführt in Schritt c, mit einer polyfunktionalen Verbindung aufweisend Hydroxygruppen, insbesondere mit einem Polyol oder durch Hydrolyse oder eine Kombination davon (Schritt d.1); und Reaktion des Produkts aus Schritt d.1. mit einer polyfunktionalen Verbindung, insbesondere einer Verbindung, die wenigstens eine erste funktionelle Gruppe, die mit Hydroxygruppen reaktiv ist, bevorzugt eine Halogengruppe, und wenigstens eine zweite funktionelle Gruppe, die mit Aminen und/oder Hydroxygruppen reaktiv ist, bevorzugt eine Epoxidgruppe, aufweist (Schritt d.2). Die Anzahl Beschichtungszyklen liegt zwischen 0 und 20.

Wenn die Anzahl Beschichtungszyklen wenigstens 2 beträgt, betrifft das Einführen oder Erzeugen von Hydroxygruppen ab der ersten Wiederholung natürlich nicht mehr oder zumindest nicht mehr ausschliesslich funktionelle Gruppen eingeführt in Schritt c, sondern vor allem entsprechende funktionelle Gruppen eingeführt in Schritt d.2. Dies gilt vor allem, wenn die Bedingungen so gewählt werden, dass die zweiten funktionellen Gruppen aus Schritt c bei der Durchführung des ersten Beschichtungszyklus im Schritt d.1 im Wesentlichen vollständig abreagieren.

Durch eine höhere Anzahl Beschichtungszyklen kann der Sauerstoffgehalt an der Oberfläche des Polymerträgermaterials weiter erhöht werden, und es lässt sich die Hydrophilie eines auf dem Polymerträgermaterial basierenden Ionenaustauschmaterials steigern. Durch die Wahl eines geeigneten Grades von Hydrophilie, kann die Wechselwirkungen des Ionenaustauschers mit stark hydratisierten Ionen (wie Fluorid) verstärkt und die Wechselwirkung mit zu schwach hydratisierten Ionen (wie Bromat, Nitrat, Chlorat) verringert werden. Dadurch kann zum Beispiel die Retentionsreihenfolge von Bromat und Chlorid beeinflusst werden, sodass Bromat im Chromatogramm quantifizierbar vor Chlorid zu liegen kommt. Ausserdem kann gewährleistet werden, dass Fluorid eine Abtrennung vom Injektionspeak, insbesondere auch bei Verwendung eines Carbonateluenten, aufweist.

Weiter kann durch das erfindungsgemässe Verfahren ein Ionenaustauschmaterial mit Bodenzahlen von > 50'000 TP/m theoretischer Böden pro Säulenmeter für die sieben Standardanionen (Fluorid, Chlorid, Nitrit, Bromid, Nitrat, Phosphat und Sulfat) mit hohen Signalsymmetrien (Asymmetrie < 1,5) erhalten werden. Alle oben genannten Ionen erscheinen basisliniengetrennt zueinander im Chromatogramm bei insgesamt kurzer Gesamtlaufzeit der Chromatographie.

Die Vorteile der hohen Robustheit der Partikel zeigen sich insbesondere, wenn eine mit einem nach obigem Verfahren erhaltenen Polymerträgermaterial gepackte Säule einem Druck-Fluss-Test unterzogen wird. Bei einem solchen Belastungstest wird die Druckentwicklung in der Säule in Abhängigkeit von einer kontinuierlich erhöhten Flussrate bestimmt. In der erfindungsgemässen Säule hängt der Druck linear von der Flussrate ab. Dies steht im Gegensatz zu Ergebnissen, welche mit herkömmlichen Säulen erzielt werden, die mit hydrophilem pDVB-Substrat, aufweisend einen hohen Vinylacetatanteil, gepackt sind. Bei herkömmlichen Säulen nimmt der Druck in Abhängigkeit der Flussrate stärker als linear zu. Es kann sich z.B. eine hyperbolische Steigung der Funktion ergeben. Dies ergibt sich beispielsweise aus der eingangs zitierten Publikation von Çaglayan et al. (J Sep Sci 2006, 29, 940).

Auch die Leistung der erfindungsgemässen Säule nach Durchführung eines Drucktests ist im Vergleich zu herkömmlichen Säulen besser. Einerseits weist die Säule nach Durchführung des Belastungstests verglichen mit herkömmlichen Säulen eine lediglich geringe Erhöhung des Druckabfalls über die Säule hinweg aus. Zudem verringert sich die Zahl theoretischer Böden im Zuge eines Belastungstests an der erfindungsgemässen Säule in deutlich geringerem Ausmass, als bei herkömmlichen Säulen der Fall ist (Çaglayan et al., J Sep Sci 2006, 29, 940). Der Erhalt der Druckverhältnisse und der Bodenzahl auch unter Verwendung hoher Flussraten ermöglicht effiziente Hochleistungstrennverfahren.

Das Verfahren kann sodann zusätzlich den Schritt e, Einführen von Ionenaustauschergruppen auf dem Reaktionsprodukt aus Schritt c oder d.2, umfassen. Durch Schritt e wird aus dem Polymerträgermaterial ein Ionenaustauschmaterial, welches die mit dem Polymerträgermaterial einhergehenden Vorteile verwirklicht, erzeugt. Hydrophilie und Kapazität bzw. Selektivität und Kapazität sind in diesem erfindungsgemässen Ionenaustauschmaterial unabhängig voneinander einstellbar. Das erfindungsgemässe Ionenaustauschmaterials weist zudem eine hohe Zahl theoretischer Böden auf.

Unter Ionenaustauschergruppen werden geladenen Gruppen an der Polymerträgermaterialoberfläche verstanden, insbesondere geladene Amin-, Arsin- oder Phosphin-Gruppen.

Unter Polymerträgermaterial, welches wenigstens teilweise gebildet ist aus aromatischen Kohlenwasserstoffverbindungen aufweisend mindestens zwei Vinyl- oder Allyl-Substituenten, ist im Rahmen dieser Erfindung zu verstehen, dass das Polymerträgermaterial durch eine Polymerisationsreaktion herstellbar ist, an welcher wenigstens aromatische Kohlenwasserstoffverbindungen, aufweisend mindestens zwei Vinyl- oder Allyl-Substituenten, beteiligt sind. Bevorzugt wird das Polymerträgermaterial durch Polymerisationsreaktionen mit Divinylbenzol gebildet. Denkbar sind aber auch Reaktionen mit Trivinylbenzol und Divinylnaphthale und Verbindungen, die dem Fachmann als gleichwertig bekannt sind.

Das Verfahren kann dadurch gekennzeichnet sein, dass das Polymerträgermaterial in Schritt a, welches wenigstens teilweise gebildet ist aus aromatischen Kohlenwasserstoffverbindungen aufweisend mindestens zwei Vinyl- oder Allyl-Substituenten, zusätzlich teilweise gebildet ist aus Monomeren ausgewählt aus der Gruppe bestehend aus Ethylvinylbenzol, Vinylacetat, Styrol, sowie einer Kombination davon. Dabei beträgt der Anteil aromatischer Kohlenwasserstoffverbindungen aufweisend mindestens zwei Vinyl- oder Allyl-Substituenten bevorzugt wenigstens 50 Gew.-%. Beispielsweise kann das Polymerträgermaterial in Schritt a wenigstens zu 50 Gew.-% aus Divinylbenzol-Einheiten bestehen. Ein solches Polymerträgermaterial hat vorteilhafte Eigenschaften hinsichtlich der Porenstruktur und weist insbesondere eine hohe Anzahl verfügbarer Doppelbindungen für die nachfolgende Oberflächenmodifizierung auf.

Das Verfahren kann dadurch gekennzeichnet sein, dass die oxidative Behandlung in Schritt b.1 eine Behandlung mit einer Persäure, bevorzugt ausgewählt aus der Gruppe bestehend aus meta-Chlorperbenzoesäure (m-CPBA), Peroxyameisensäure, Peroxyessigsäure, Peroxytrifluoressigsäure, eine Behandlung mit KMnO₄, eine Behandlung mit Sauerstoffplama oder einer Kombination davon, ist. Durch Einwirkung einer Persäure auf das Polymer werden vorhandene Doppelbindungen oxidiert und der nachfolgenden Reduktion oder Hydrolyse zugänglich gemacht. Es versteht sich von selbst, dass der Effekt grundsätzlich auch durch andere, dem Fachmann bekannte oxidative Verfahren erzielt werden kann, etwa durch Ozonolyse.

Falls eine Persäure verwendet wird, kann diese zum in Suspension vorliegenden Polymer gegeben werden oder *in situ* aus einer Säure und Wasserstoffperoxid gebildet werden. Bevorzugt wird das suspendierte Kernpolymerträgermaterial, z.B. PS/DVB-Polymerträgermaterial, mit m-CPBA versetzt, da dieses als Feststoff unkompliziert in der Handhabung ist.

In einer bevorzugten Ausführungsform erfolgt die reduktive Behandlung des Reaktionsprodukts aus dem Oxidationsschritt b.1 im Schritt b.2 mit einem Reagenz zur Reduktion polarer Bindungen, bevorzugt mit einem Metallhydrid. Die Reduktion überführt die gebildeten Oxidationsprodukte in Alkohole. Dabei wird bevorzugt Lithiumaluminiumhydrid in Diethylether verwendet. In einer Ausführungsform wird eine 1-20% w/v Polymersuspension in trockenem Diethylether dargestellt, zu der 5-100% w/w der Polymertrockenmasse an Lithiumaluminiumhydrid gegeben werden. Besonders bevorzugt wird eine 5-15% w/v Polymersuspension in trockenem Diethylether dargestellt, zu der 5-20% w/w der Polymertrockenmasse an Lithiumaluminiumhydrid gegeben werden. Dabei kann eine Temperatur von 25-70°C gewählt werden, besonders bevorzugt die Siedetemperatur von Diethylether, sowie eine Reaktionszeit von 1 min bis 72h, besonders bevorzugt von 3h bis 48h.

Die durch das oben beschriebene Verfahren erzeugten OH-Gruppen auf der Polymerträgermaterialoberfläche stehen nun in hinreichender Zahl für die Modifikation in Schritt c zur Verfügung. Alternativ zu reduktiven Bedingungen können auch hydrolytische Bedingungen gewählt werden.

Das Reaktionsprodukt aus Schritt b.2 wird mit einer polyfunktionalen Verbindung umgesetzt, insbesondere mit einer Verbindung, die wenigstens eine erste funktionelle Gruppe, die mit Hydroxygruppen reaktiv ist, bevorzugt eine Halogengruppe, und wenigstens eine zweite funktionelle Gruppe, die mit Aminen und/oder Hydroxygruppen reaktiv ist, bevorzugt eine Epoxidgruppe, aufweist.

Die erste, mit Hydroxygruppen reaktive funktionelle Gruppe kann eine durch OH-Gruppen oder Amin-Gruppen nukleophil angreifbare Struktur sein, etwa ein Halogenkohlenwasserstoff, ein Epoxid, ein Tosylat, ein Methylsulfid oder eine Mischung davon. Die zweite, mit Aminen und/oder Hydroxygruppen reaktive funktionelle Gruppe kann zum Beispiel ein Epoxid sein. Bevorzugt ist die polyfunktionale Verbindung in Schritt c Epichlorhydrin (ECH). Beispielsweise kann das Substrat in Epichlorhydrin suspendiert werden (bevorzugt 5-30% w/v Feststoff in ECH, besonders bevorzugt 10-20% w/v Feststoff in ECH). Danach kann es mit einer Base, etwa wässrigem Alkali- und Erdalkalimetallhydroxid umgesetzt werden. Dazu haben sich wässrige Lösungen von NaOH und KOH, besonders bevorzugt 10-50% w/w NaOH im Verhältnis ECH:NaOH(aq)=1:(0,1-10) als geeignet erwiesen. Besonders bevorzugt erfolgt die Umsetzung unter Verwendung eines quartären Ammoniumsalzes als Phasentransferkatalysator. Alternativ kann das in ECH suspendierte Substrat mit einem quartären Ammoniumhydroxid umgesetzt werden. Dazu hat sich Tetramethylammoniumhydroxid als geeignet erwiesen. Bevorzugt wird die nach obigen Angaben hergestellte Suspension von Polymer in ECH mit der gleichen Menge an Dimethylsulfoxid (DMSO) wie ECH versetzt und pro Gramm eingesetztes Polymer bevorzugt zwischen 1 und 10 mmol Tetramethylammoniumhydroxid in konzentrierter wässriger Lösung zugegeben, besonders bevorzugt zwischen 2 und 5 mmol Tetramethylammoniumhydroxid (aq).

Die in Schritt c verwendete polyfunktionale Verbindung, die wenigstens eine erste mit Hydroxygruppen reaktive funktionelle Gruppe und wenigstens eine zweite mit Aminen und/oder Hydroxygruppen reaktive funktionelle Gruppe aufweist, kann allerdings auch ein Spacermolekül sein.

Im Rahmen dieser Anmeldung bedeutet ein Spacermolekül (kurz: Spacer) ein Molekül, aufweisend die vorgenannten wenigstens zwei funktionellen Gruppen, wobei das Molekül eine Beabstandung von mindestens 3 Atomen, bevorzugt von 3 bis 20 Atomen zwischen der modifizierten Polymerträgermaterialoberfläche und einzubringenden Ionenaustauschergruppen gewährleistet. Das Spacermolekül bindet im fertigen Ionenaustauschmaterial einerseits an das modifizierte Polymerträgermaterial und andererseits an die Austauschergruppe. Die funktionellen Gruppen des Spacermoleküls können durch OH-Gruppen oder Amin-Gruppen nukleophil angreifbare Strukturen, etwa Halogenkohlenwasserstoffe, Epoxide, Tosylate, Methylsulfide oder eine Mischung davon sein. Die beabstandenden Atome können Karbonketten sein aber auch Heteroatome einschliessen, beispielsweise Ethergruppen oder Thioether. Durch das Spacermolekül wird eine Beabstandung zwischen Substrat und Ionenaustauschergruppe erreicht. Die Funktion des Spacers ist es zu verhindern, dass die Ionen mit dem Substrat interagieren. Damit wird unerwünschter Peak-Verbreiterung im Chromatogramm entgegengewirkt. Beabstandende Kohlenstoffketten mit Ethergruppen sind aufgrund der höheren Hydrophilie bevorzugt. Besonders bevorzugt weist der Spacer Glycidyl-Gruppen auf, welche mit Aminen, Phosphinen, Arsinen und/oder Hydroxy-Gruppen reagieren können. Besonders bevorzugt ist das Spacer-Molekül 1,4-ButandiolDiglycidylether.

Wenn in Schritt d.1 Hydroxygruppen durch Reaktion der zweiten funktionellen Gruppe, eingeführt in Schritt c (oder gegebenenfalls in Schritt d.2), durch Umsetzen mit polyfunktionalen Verbindungen aufweisend Hydroxygruppen eingeführt werden, ist die Verwendung eines Diols bevorzugt. Besonders bevorzugt ist Butandiol. Das Diol kann als Solvens und Reaktand verwendet werden und die Reaktion kann unter Basenkatalyse bei erhöhter Temperatur stattfinden. Besonders bevorzugt wird 0.1-1 mol/L KOH bei 60-160°C für 1-48h eingesetzt. Ganz besonders bevorzugt beträgt die Temperatur 100-130°C und die Reaktionsdauer 3-36h. Durch die Zugabe einer solchen Verbindung werden vorgängig ans Substrat gebundene Epoxide zu OH-Gruppen-haltigen Ketten umgesetzt.

In einer Ausführungsform ist die in Schritt d.2 verwendete polyfunktionale Verbindung, die wenigstens eine erste mit Hydroxygruppen reaktive funktionelle Gruppe und wenigstens eine zweite mit Aminen und/oder Hydroxygruppen reaktive funktionelle Gruppe aufweist, ein Epihalohydrin, bevorzugt Epichlorhydrin. Dabei kann der Trägerpolymerpartikel zunächst in Epichlorhydrin suspendiert werden (bevorzugt: 5-30% w/v Feststoff in ECH, besonders bevorzugt 10- 30% w/v Feststoff in ECH). Danach kann die Suspension mit einer Base, etwa wässrigen Lösungen von Alkali- oder Erdalkalimetallhydroxid, umgesetzt werden. Dazu haben sich wässrige Lösungen von NaOH und KOH, besonders bevorzugt 10-50% w/w NaOH im Verhältnis ECH:NaOH(aq)=1:(0,1-10) als geeignet erwiesen. Besonders bevorzugt erfolgt die Umsetzung unter Verwendung eines quartären Ammoniumsalzes als Phasentransferkatalysator.

Es kann in Schritt d.2 allerdings auch alternativ ein Spacermolekül verwendet werden. Besonders bevorzugt ist es, wenn zumindest bei der letzten Durchführung des Beschichtungszyklusses in Schritt d.2 ein Spacermolekül verwendet wird.

Es ist ein bevorzugtes Merkmal der vorliegenden Erfindung, dass die Schritte d.1 und d.2, welche zusammen auch als Beschichtungszyklus bezeichnet werden, sich wiederholen können. Die Anzahl Beschichtungszyklen kann zwischen 0 und 20, bevorzugt zwischen 0 und 10 liegen. Es ist jedoch bevorzugt, dass die Anzahl Beschichtungszyklen zwischen 0 und 5, noch mehr bevorzugt zwischen 1 und 3 liegt.

Bei jedem Zyklus erhöht sich die Hydrophilie des Polymerträgermaterials. Durch geeignete Wahl der Anzahl Zyklen, kann die Hydrophilie optimal auf das zu trennende Gemisch abgestimmt werden. Insbesondere können durch die Wahl eines geeigneten Grades von Hydrophilie hydrophile Wechselwirkungen des Substrats mit stark hydratisierten Ionen (wie Fluorid) verstärkt und die Wechselwirkung mit schwach hydratisierten Ionen (wie Bromat, Nitrat, Chlorat) verringert werden. Dadurch kann die Retentionsreihenfolge beeinflusst werden. Durch jede Schichterzeugung reduzieren sich zudem die sekundären Wechselwirkungen zwischen polarisierbaren Ionen wie Chlorat oder Bromat einerseits und dem Substrat andererseits. Das Tailing der Signalpeaks, welches aufgrund solcher sekundären Wechselwirkungen beobachtet wird, nimmt deutlich ab, sodass auch polarisierbare Ionen symmetrisch eluieren. Die Gesamtkapazität des Austauschmaterials nimmt ab.

In einer bevorzugten Ausführungsform, wird in der letzten Durchführung des Beschichtungszyklus d als polyfunktionale Verbindung in Schritt d.2 ein Spacermolekül verwendet, insbesondere ein Diepoxid, bevorzugt Butandioldiglycidylether. Die Vorteile eines Spacermoleküls wurden bereits bei vorstehend im Zusammenhang mit Schritt c beschrieben. Die Umsetzung eines Spacermoleküls erfolgt bevorzugt unter Zugabe eines polaren Lösungsmittels zur Reaktionsmischung, besonders bevorzugt DMSO im Volumenverhältnis von 1: (0,1-5), besonders bevorzugt im Verhältnis 1: (0,5-1,5) bezogen auf Diglycidylether. Ebenfalls bevorzugt ist die Verwendung eines quartären Ammoniumsalzes als Phasentransferkatalysator, besonders bevorzugt Tetrabutylammoniumbromid im Konzentrationsbereich von bevorzugt 1-100 mmol/L, besonders bevorzugt 10-50 mmol/L, bezogen auf das Gesamtvolumen der Reaktionsmischung. Als Base können Alkali- und Erdalkalimetallhydroxide und - carbonate verwendet werden, bevorzugt wässrige Lösungen von NaOH und KOH, besonders bevorzugt NaOH im Konzentrationsbereich von 0,1-5 mol/L, ganz besonders bevorzugt im Konzentrationsbereich von 0,1-1 mol/L. Das Volumenverhältnis bezogen auf den Diglycidylether beträgt dabei 1: (0,1-5), bevorzugt 1: (0,5-1,5). Die bevorzugte Reaktionstemperatur beträgt 0-50°C, besonders bevorzugt 20-30°C, bei einer bevorzugten Reaktionszeit von 2-40h, besonders bevorzugt 15-25h.

In einer bevorzugten Ausführungsform wird die Ionenaustauschergruppe eingeführt durch Reaktion der Verbindung aus Schritt c oder d.2 mit einer elementorganischen Verbindung der 5. Hauptgruppe, bevorzugt einem Amin, besonders bevorzugt einem tertiären Amin. Die Ionenaustauschergruppe kann jedoch anstelle des Amins ein Phosphin oder Arsin aufweisen. Als besonders geeignet hat sich eine Verbindung enthaltend ein Amin mit 1 bis 3 organischen Resten von 1 bis 10 C-Atomen pro Rest, wobei dies auch zyklische Verbindungen einschliesst, erwiesen. Die zyklischen Verbindungen können Substituenten aufweisen. Beispiele geeigneter Verbindungen sind stickstoffhaltige Heterozyklen, zum Beispiel Pyridine mit oder ohne Kohlewasserstoff- oder Hydroxy-Substituenten, einfach substitutierte Alkylpyrrolidine, einfach substitutierte Alkylpiperidine oder zweifach substitutierte Alkylpiperazine. Die Kohlenwasserstoffreste der Aminverbindungen können auch Heteroatome, z.B. Sauerstoff oder Schwefelatome, oder andere Substituenten aufweisen.

Denkbar wäre jedoch auch das Einführen von Verbindungen geeignet für die Kationenaustauschchromatographie oder HILIC-Verfahren. Geeignete kationische funktionelle Gruppen umfassen Sulfonsäuren, Carbonsäuren oder Kombinationen davon. Bevorzugt können die einzuführenden Verbindungen auch mehrere funktionelle Gruppen aufweisen, beispielsweise, wenn Aminosäuren eingeführt werden.

Zur Erzeugung eines kationischen Austauscherzentrums kann beispielsweise das im vorherigen Schritt epoxidierte Polymer in einer Mischung aus Wasser und einem polaren Lösungsmittel, bevorzugt DMSO, suspendiert werden und ein bevorzugtes Amin hinzugegeben werden. Die bevorzugte Reaktionszeit liegt zwischen 0,5 und 48h bei einer bevorzugten Temperatur von 20-70°C.

Es ist bevorzugt, dass Schritt e, das Einführen von Ionenaustauschergruppen, gefolgt ist von einem weiteren Schritt f umfassend das Erhitzen des mit Ionenaustauschergruppen versehenen Polymerträgermaterials in alkalischer Lösung. Dadurch kann die Selektivität und Kapazität des Ionenaustauschmaterials aus dem vorhergehenden Schritt eingestellt werden. Die Behandlung wird im Folgenden als Elimination bezeichnet und besteht insbesondere im Erhitzen der mit Austauschergruppen versehenen Partikel in wässrig alkalischer Lösung, besonders bevorzugt im Erhitzen in einer wässrigen Lösung von Alkali- oder Erdalkalimetallhydroxid oder - carbonat, beispielsweise in Natronlauge. Die bevorzugte Konzentration von NaOH liegt im Bereich von 0,1 bis 5 mol/L Base, besonders bevorzugt ist 0,2 bis 2 mol/L Base. Die Reaktionstemperatur kann 20-100°C betragen, besonders bevorzugt sind 90-100°C, bei einer Behandlungszeit von 0,1-150h, besonders bevorzugt 2-6h.

Durch den Eliminationsschritt wird die relative Intensität der Wechselwirkung des Substrats mit einzelnen Ionen verändert. Insbesondere können sekundäre Wechselwirkungen mit polarisierbaren Analyten reduziert werden. Das Tailing der Signalpeaks, welches aufgrund solcher sekundären Wechselwirkungen beobachtet wird, nimmt ab, sodass auch polarisierbare Ionen symmetrisch eluieren. Gleichzeitig reduziert sich nach der Elimination auch die elektrostatische Interaktionsfähigkeit der Säule und die Gesamtkapazität des Ionenaustauschmaterials nimmt ab.

Ein weiterer Aspekt der Erfindung betrifft ein Polymerträgermaterial für die Verwendung als stationäre Phase in einem analytischen oder präparativen Trennverfahren, insbesondere Chromatographieverfahren, erhältlich durch ein Verfahren umfassend die Schritte wie vorstehend beschrieben, wenigstens die Schritte a, b und c.

Ein weiterer Aspekt der Erfindung betrifft ein Polymerträgermaterial für die Verwendung als stationäre Phase in der Ionenaustauschchromatographie, wenn das Verfahren wenigstens die Schritte a, b, c und e umfasst.

Ein so erhältliches modifiziertes Polymerträgermaterial ist dadurch charakterisiert, dass
- beim Querschnitt durch das Polymerträgermaterial mittels Röntgenphotoelektronenspektroskopie XPS zwischen Bereichen mit maximalem O-Anteil und Bereichen mit minimalem O-Anteil Unterschiede von wenigstens 20%, bevorzugt Unterschiede von wenigstens 50%, und besonders bevorzugt Unterschiede von 100% nachweisbar sind, jeweils ausgehend vom Wert des maximalen O-Anteils;
- die Sauerstoff aufweisenden Gruppen kovalent an das Kern-Polymerträgermaterial gebunden sind;
- das Polymerträgermaterial mechanisch stabil ist, so dass der Druckabfall über eine mit dem Polymerträgermaterial gepackten Säule in Abhängigkeit von einer erhöhten Flussrate lediglich linear zunimmt;
- das Polymerträgermaterial bei neutralem pH-Wert keine Ladung trägt;
- das Polymerträgermaterial einen Stickstoffgehalt von weniger als 2% aufweist.

Das modifizierte Polymerträgermaterial weist insbesondere an der Oberfläche einen höheren Sauerstoffanteil auf als im Kern. Das durch das Verfahren erhaltene modifizierte Polymerträgermaterial ist zudem chemisch weitgehend inert. Das so beschaffene Polymerträgermaterial ist einstellbar insofern, als es eine mehr oder weniger sauerstoffhaltige Oberfläche aufweisen kann. Das Material ist aufgrund seiner Struktur und Oberflächenbeschaffenheit besonders geeignet für die Verwendung als stationäre Phase in analytischen oder präparativen Trennverfahren. Insbesondere ist das Substrat geeignet für die Weiterverarbeitung zu partikulärem Ionenaustauschermaterial, hergestellt nach dem oben beschriebenen Verfahren, welches ebenfalls Teil der Erfindung ist. Das Polymerträgermaterial lässt sich jedoch auch weiterverarbeiten zum Einsatz in anderen Adsorptionschromatographieverfahren, HILIC Verfahren, Umkehrphasenchromatographie, Festphasenextraktion, etc.

Ein weiterer Aspekt der Erfindung betrifft ein erfindungsgemäss modifizertes Polymerträgermaterial für die Verwendung als stationäre Phase in der Ionenaustauschchromatographie, erhältlich durch ein Verfahren umfassend die Schritte wie oben beschrieben, wobei in das Polymerträgermaterial gemäss Schritt e zusätzlich Ionenaustauschergruppen eingeführt sind.

Ein so erhältliches Ionenaustauschermaterial kann dadurch charakterisiert werden, dass
- beim Querschnitt durch das Polymerträgermaterial mittels Röntgenphotoelektronenspektroskopie XPS zwischen Bereichen mit maximalem O-Anteil und Bereichen mit minimalem O-Anteil Unterschiede von wenigstens 20%, bevorzugt Unterschiede von wenigstens 50%, und besonders bevorzugt Unterschiede von 100% nachweisbar sind, jeweils ausgehend vom Wert des maximalen O-Anteils;
- die Sauerstoff aufweisenden Gruppen kovalent an das Kern-Polymerträgermaterial gebunden sind;
- das Ionenaustauschmaterial mechanisch stabil ist, so dass der Druckabfall bei einer mit dem Polymerträgermaterial gepackten Säule in Abhängigkeit von einer erhöhter Flussrate lediglich linear zunimmt;
- das Ionenaustauschmaterial mit Ausnahme der eingeführten Ionenaustauschergruppen nicht auf Modifikationen mittels Epoxid-Amin-Reaktionen basiert, gegebenenfalls nachweisbar durch Hofmann-Eliminierung;
- optional, das Ionenaustauschmaterial eine Bodenzahl > 50'000 TP/m aufweist;
- optional, Selektivität und Kapazität zusätzlich mit Eliminierungsschritt f einstellbar sind.

Das Ionenaustauschmaterial weist insbesondere an der Oberfläche einen höheren Sauerstoffanteil auf als im Kern. Beispielsweise weist die Oberfläche eines modifizierten Polymerträgermaterials hergestellt gemäss dem erfindungsgemässen Verfahren bis und mit Schritt c einen um 50% höheren, bevorzugt um 60% höheren, Sauerstoffanteil, ausgehend vom Wert des maximalen O-Anteils, auf als die inneren Partikelbereiche, nachweisbar durch XPS-Messungen.

Es ist ein Vorzug des erfindungsgemässen Ionenaustauschmaterials, dass Hydrophilie und Kapazität bzw. Selektivität und Kapazität in individuellen Schritten, d.h. unabhängig voneinander, konfigurierbar sind. Das nach dem erfindungsgemässen Verfahren hergestellte Ionenaustauschmaterial zeigt nur schwache sekundäre Wechselwirkungen mit polarisierbaren Ionen und erhöht die Retentionszeit stark hydratisierter Ionen. Eine mit hydrophilisiertem Ionenaustausch-Substrat gepackte Säule zeigt die gewünschte Selektivität. Das Material quillt nicht und zeigt vorteilhafte Eigenschaften in Belastungstests. Es kann mit dem Ionenaustauschmaterial eine besonders leistungsfähige Säule gepackt werden.

Bevorzugt liegt das modifizierte Polymerträgermaterial als Partikel, bevorzugt als sphärischer Partikel, besonders bevorzugt als sphärische Partikel mit einer durchschnittlichen Grösse von 1-100 µm vor. Besonders bevorzugt liegen die Partikel im Grössenbereich von 2-50 µm und ganz besonders bevorzugt im Grössenbereich von 3-25 µm vor, messbar mittels Rasterelektronenmikroskopie (REM).

Die Grösse der Partikel kann durch geeignete Rührgeschwindigkeit, Wahl des Lösungsmittels, Konzentration des Polymers im Lösungsmittel, etc. eingestellt werden. Die Verfahren sind dem Fachmann bekannt. Ein Trägerpolymer dieser Form und Grösse weist ein Volumen/Oberflächenverhältnis auf, welches sich als besonders vorteilhaft für die Austauscherkapazität erwiesen hat. Es weist hohe Diffusivität in die Poren auf und ist leicht packbar.

Das modifizierte Polymerträgermaterial kann allerdings alternativ auch in Membran-Chromatographieverfahren oder Monolith-Chromatographieverfahren eingesetzt werden.

Ein weiterer Aspekt der Erfindung betrifft eine Ionenaustauschchromatographiesäule, befüllt mit modifiziertem Polymerträgermaterial, bevorzugt partikulärem modifiziertem Polymerträgermaterial, welches mit dem erfindungsgemässen Verfahren erzeugbar ist.

Ferner betrifft die Erfindung ein Verfahren zur chromatographischen Trennung von Analyten, dadurch gekennzeichnet, dass eine Lösung enthaltend die Analyten mit einem erfindungsgemässen modifizierten Polymerträgermaterial kontaktiert wird, insbesondere durch eine erfindungsgemässe Ionenaustauschchromatographiesäule geleitet wird.

Die Erfindung betrifft sodann die Verwendung von Polymerträgermaterial erhältlich mit dem erfindungsgemässen Verfahren zur analytischen oder präparativen Trennung von Analyten, insbesondere Verwendung in der Anionenaustauschchromatographie, Kationenaustauschchromatographie und/oder in der HILIC Chromatographie (hydrophilic interaction liquid chromatography).

Um die Erfindung weiter zu illustrieren werden die folgenden beispielhaften Ausführungsformen beschrieben. Die Ausführungsbeispiele haben keinerlei einschränkende Wirkung auf den Offenbarungsgehalt und den Anspruch der Erfindung.

Es zeigen die folgenden Figuren:
- Fig 1:: Schematische Darstellung beispielhafter Modifizierungssequenzen am Polymerträgermaterial;
- Fig 2:: Schematische Darstellung der Modifizierungsschritte b.1 und b.2;
- Fig 3:: Schematische Darstellung der Modifizierungsschritte b.1 und b.2 gefolgt von beispielhaften Modifizierungsschritten c und d.1;
- Fig 4:: Schematische Darstellung eines alternativen Modifizierungsschritts c oder d.2;
- Fig 5:: Schematische Darstellung des Resultats eines Modifizierungsschritts d.1 gefolgt von einer Umsetzung mit BDGE (Butandioldiglycidylether);
- Fig 6:: Schematische Darstellung eines Beispiels eines an den Schritt c oder d.2 anschliessenden Modifizierungsschritts e, Einführen einer Ionenaustauschergruppe;
- Fig 7:: Ein mit einer Chromatographiesäule nach Ausführungsbeispiel 1 oder 4 erhältliches Chromatogramm;
- Fig 8:: Mit Chromatographiesäulen nach Ausführungsbeispiel 1 oder 4 erhältliche Chromatogramme mit steigender Anzahl Wiederholungen von Modifizierungsschritt d;
- Fig 9:: Druck-Fluss Profil gemessen an einer erfindungsgemässen Chromatographiesäule;
- Fig 10:: Mit Chromatographiesäulen nach Ausführungsbeispiel 1 oder 4 erhältliche Chromatogramme mit steigender Dauer von Schritt f.

### Ausführungsbeispiel 1:

Alle eingesetzten Substanzen waren als "reinst" oder "pa" klassifiziert (mit Ausnahme des Wasserstoffperoxides und der Ameisensäure), Lösungsmittel wurden durch Destillation am Rotationsverdampfer von schwerflüchtigen Bestandteilen abgetrennt.

### Oxidation mit Kaliumpermanganat

10.0 g PS/DVB (55% DVB in EVB) wurden in einen 350 mL Sulfierkolben vorgelegt und mit 100 mL Acetonitril suspendiert. Dann wurden 5,0 g KMnO₄ gelöst in 100 mL Wasser über 20 Minuten zugetropft. Die Reaktionslösung wurde mit wenig Säure auf einen sauren pH-Wert eingestellt. Die Suspension wurde für 120 h bei 25 °C gerührt. Die Aufarbeitung der Partikel erfolgte mit halbkonzentrierter Salzsäure und anschliessendem Waschen mit Reinstwasser. Das Produkt wurde im Vakuumtrockenschrank zur Gewichtskonstanz getrocknet. Das Endgewicht betrug 9,7 g.

### Reduktion mit Lithiumaluminiumhydrid

8.6 g der getrockneten, oxidierten Partikel wurden in einen 500 mL Reaktor vorgelegt und mit 150 mL THF versetzt. Unter Argonatmosphäre und externer Kühlung auf 5 °C wurde 1.5 g Lithiumaluminiumhydrid langsam zugegeben und mit weiteren 50 mL THF versetzt. Der Reaktor wurde auf Raumtemperatur erwärmt und für 17 h gerührt. Die Reaktion wurde durch langsame Wasserzugabe abgebrochen. Anschliessend erfolgt die Aufarbeitung mit Wasser/Aceton, Ansäuern mit verdünnter Schwefelsäure und neutral Waschen mit Wasser. Nach Abschliessendem Waschen mit Aceton wird der erhaltene Feststoff im Vakuumtrockenschrank getrocknet. Es wurden 8.35 g Partikel erhalten.

### Umsetzen mit Epichlorhydrin (ECH)

7,6 g reduzierte, getrocknete Partikel werden in einem 250 mL Dreihalskolben vorgelegt. Es wurden 35 mL Epichlorhydrin zugegeben und das Gemisch 3mal evakuiert und mit Argon belüftet. Die Lösung wurde auf 45 °C erwärmt. Anschliessend wurden 7 mL der Phasentransferkatalysatorlösung (3 g Tetrabutylammoniumhydroxid in 10 mL Wasser) zugegeben, weitere Zugabe von 140 mL Natronlauge. Die Reaktion wurde für 3.5 Stunden gerührt und anschliessend durch Zugabe von Wasser/Ethanol abgebrochen. Aufarbeitung erfolgte mit Wasser/Ethanol bzw. Wasser/Aceton. Das Produkt wurde ohne Trocknen direkt in der nächsten Stufe eingesetzt.

### Umsetzen mit Butandiol

Das obige Polymer wurde anschliessend bei Raumtemperatur zusammen mit 1,98 g KOH in 70 mL Butandiol suspendiert und anschliessend für 18 h bei 130 °C gerührt. Nach Beendigung der Reaktionszeit wurde die Reaktionsmischung mit Wasser versetzt und filtriert. Mehrmaliges Waschen des Polymers erfolgte mit Wasser und Aceton. Der Filterkuchen wurde im Vakuumtrockenschrank getrocknet über Nacht. Es wurden 7 g Polymer erhalten.

### Anbringen eines Spacers

6,6 g des obigen Polymers wurden in 16,5 mL DMSO und 16,5 mL Butandioldiglycidylether suspendiert und drei Mal evakuiert und anschliessend belüftet. Daraufhin wurden 1,4 mL 1M Tetrabutylammoniumbromid-Lösung sowie 16,5 mL 0,6M NaOH (aq) hinzugegeben und für 22 h mechanisch gerührt. Reaktionsabbruch erfolgte durch Zugabe einer 1:1-Mischung aus Wasser und Ethanol. Mehrmaliges Waschen erfolgte mit einer Wasser/Ethanol-Mischung. Das Produkt wurde abschliessend zur Trockne filtriert. Das Polymer wurde direkt in der nächsten Stufe eingesetzt.

### Einführen von Anionenaustauschergruppen

Das obige Polymer wurde daraufhin übergangslos in 45 mL DMSO suspendiert und anschliessend mit 45 mL Wasser versetzt. Die Suspension wurde auf 70 °C erwärmt und 45 mL N-Methylpyrrolidin zugegeben. Nach Beendigung der Reaktionszeit von 2 h wurde die Reaktion durch Zugabe von Essigsäure abgebrochen. Das Polymer wurde abfiltriert und mehrmals mit Wasser gewaschen. Das feuchte Polymer wurde in der nächsten Stufe direkt eingesetzt.

### Eliminierung

Das obige Polymer wurde in 50 mL Wasser suspendiert und mit 7,5 mL 40% NaOH (aq) versetzt. Daraufhin wurde die Suspension für 4 h bei 100 °C gerührt. Abbruch der Reaktion erfolgte durch Filtration. Der Filterkuchen wurde mehrmals mit Reinstwasser gewaschen und dann nach bekannten Hochdruckpackverfahren in eine 4x100 mm PEEK-Säule gepackt.

### Ausführungsbeispiel 2:

### Oxidation mit Niederdruck Sauerstoffplasma

40 g PS/DVB (55% DVB in EVB) wurden in einer Plasmapulveranlage mittels Sauerstoffplasma oxidiert. Die Partikel können direkt nach der Behandlung weiterverarbeitet werden.

### Reduktion mit Lithiumaluminiumhydrid (LAH)

30 g des oxidierten, getrockneten Polymers wurden in einem 1000 mL Reaktor mit Druckausgleich in 250 mL trockenem Diethylether suspendiert. Bei Temperierung auf 25 °C wurde unter Argonatmosphäre langsam 6 g Lithiumaluminiumhydrid hinzugegeben, unter Rühren für 6 h auf 30°C erhitzt und weitere 20 h bei Raumtemperatur gerührt. Reaktionsabbruch erfolgt durch Abkühlen des Reaktionsgemisches auf 0 °C und langsames Zutropfen von 15 mL Ethylacetat. Es erfolgte die Aufarbeitung mit Wasser, verdünnte Schwefelsäure, Wasser, 5 w% NaOH Lösung, Reinstwasser und verdünnter Salzsäure.

Das Polymer wurde mit Reinstwasser neutral gewaschen und mit Aceton trocken filtriert. Das Produkt wurde im Vakuumtrockenschrank getrocknet. Es wurden 30 g Polymer erhalten.

### Umsetzen mit Epichlorhydrin

5.0 g reduzierte, getrocknete Partikel wurden in einem 250 mL Dreihalskolben vorgelegt und mit 25 mL Epichlorhydrin versetzt. Die Suspension wurde 3mal evakuiert und mit Argon belüftet. Anschliessend wurden 1.75 mL der 1 M Phasentransferkatalysatorlösung (Tetrabutylammoniumbromid in Wasser) und 25 mL 30% Natronlauge zugegeben, auf 45 °C erwärmt und für 3.5 Stunden gerührt. Der Reaktionsabbruch erfolgte über Zugabe von Wasser/Ethanol. Aufreinigung des Produktes erfolgte durch mehrmaliges Waschen mit Wasser/Ethanol bzw. Wasser/Aceton. Das Produkt wurde ohne Trocknen direkt in der nächsten Stufe eingesetzt.

### Umsetzen mit Butandiol

Das obige Polymer wurde anschliessend bei Raumtemperatur mit 1.3 g KOH in 50 mL Butandiol suspendiert und für 18 h auf 130 °C erwärmt. Nach Beendigung der Reaktionszeit wurde die Reaktionsmischung mit 200 mL Wasser versetzt und filtriert. Der Filterkuchen wurde mit Wasser und Aceton gewaschen. Das Produkt wurde im Vakuumtrockenschrank getrocknet und es wurden 4,2 g trockenes Produkt erhalten.

### Anbringen eines Spacers

3.8 g des obigen Polymers wurden in 10 mL DMSO und 10 mL Butandioldiglycidylether suspendiert und dreimal einem Druckwechsel ausgesetzt, wobei das Reaktionsgefäss mit Argon wiederbefüllt wurde. Daraufhin wurden 0.8 mL 1M Tetrabutylammoniumbromid-Lösung sowie 10 mL 0,6M NaOH (aq) hinzugegeben und für 22 h gerührt. Anschliessend wurde die Reaktionsmischung mit 200 mL einer 1:1-Mischung aus Wasser und Ethanol versetzt und filtriert. Dieser Waschvorgang wurde mehrmals wiederholt, das Produkt zur Trockene filtriert und direkt in der nächsten Stufe eingesetzt.

### Einführen von Ionenaustauschergruppen

Das obige Polymer wurde in 30 mL DMSO suspendiert, mit 30 mL Wasser versetzt und die Suspension auf 70 °C erwärmt. Nach Erreichen der Reaktionstemperatur wurde 30 mL N-Methylpyrrolidin zugegeben und 2 h bei 70 °C gerührt. Nach Beendigung der Reaktionszeit wurden 60 mL konzentrierte Essigsäure zugegeben und das Produkt abfiltriert. Der Filterkuchen wurde mit Wasser neutral gewaschen und in der Eliminierung eingesetzt.

### Eliminierung

Das obige Polymer wurde in 100 mL Wasser suspendiert, mit 20 mL 30% NaOH (aq) versetzt und für 28 h bei 100 °C gerührt. Nach Beendigung der Reaktionszeit wurde die Reaktion durch Zugabe von Salzsäure abgebrochen, die Suspension filtriert, der Filterkuchen mehrmals mit Wasser neutral gewaschen und dann nach bekannten Hochdruckpackverfahren in eine 4x100 mm PEEK-Säule gepackt.

### Ausführungsbeispiel 3:

### Oxidation mit meta-Chlorperbenzoesäure

20 g PS/DVB (55% DVB in EVB) wurden in einer 250 mL Glasflasche mit Gewindedeckel vorgelegt und mit 93 g Dichlormethan suspendiert. Dann wurden 5,5 g meta-Chlorperbenzoesäure als Feststoff zugegeben und das Reaktionsgemisch bei Raumtemperatur für 18 h auf einem Schüttler durchmischt. Das Produkt wurde mehrmals mit Ethanol und Wasser gewaschen und im Vakuumtrockenschrank zur Gewichtskonsistenz getrocknet. Das Endgewicht betrug 19,0 g.

### Hydrolyse mit Salzsäure

19 g des oxidierten, getrockneten Polymers wurden in einer 250 mL Glasflasche mit Gewindedeckel vorgelegt und mit 52 g Aceton und 13 g Salzsäure 37% suspendiert. Das Reaktionsgemisch wurde bei 40°C auf einem Umluft-Heizschüttler für 21 h durchmischt. Das Produkt wurde mit Wasser neutral gewaschen, dann mehrmals mit Wasser und Aceton gewaschen und im Vakuumtrockenschrank zur Gewichtskonstanz getrocknet. Das Endgewicht betrug 18,5 g.

### Umsetzen mit Epichlorhydrin

11,8 g des hydrolysierten, getrockneten Polymers wurden in einem 250 mL Dreihalskolben mit 60 mL Epichlorhydrin suspendiert. Das Reaktionsgefäss wurde drei Vakuum/Argon-Zyklen unterzogen. Das Reaktionsgemisch wurde unter Rühren auf 45°C erhitzt und dann 3 mL 1 M (aq) Tetrabutylammoniumbromidlösung hinzugegeben. Anschliessend wurden 60 mL 30% (aq) Natriumhydroxidlösung hinzugegeben und kräftig gerührt. Nach 22 h Reaktionszeit wurde das Reaktionsgemisch mit 200 mL Wasser und 200 mL Ethanol verdünnt und dann das Polymer abfiltriert. Das Polymer wurde mit Aceton, Wasser und dann wieder Aceton gewaschen.

### Umsetzen mit Butandiol

5 g des obigen Produkts wurden in einem 100 mL Dreihalskolben mit 1,4 g Kaliumhydroxid und 50 mL 1,4-Butandiol suspendiert und für 19 h bei 130°C durchmischt. Anschliessend wurde das Reaktionsgemisch abgekühlt und mit 45 mL Wasser vermischt. Das Produkt wurde abfiltriert und mit Wasser zur Neutralität gewaschen, dann im Vakuumtrockenschrank zur Gewichtskonsistenz getrocknet. Das Endgewicht betrug 4,0 g.

### Reaktion mit 1,4-Butandioldiglycidylether

3,1 g des obigen Produkts wurden in einem 100 mL Dreihalskolben mit 8 mL Dimethylsulfoxid und 8 mL 1,4-Butandioldiglycidylether suspendiert. Das Reaktionsgefäss wurde drei Vakuum/Argon-Zyklen unterzogen. Unter Rühren wurden 0,8 mL 1 M (aq) Tetrabutylammoniumbromidlösung und 8 mL 0,6 M Natriumhydroxidlösung zur Reaktion gegeben. Nach 22 h Reaktionsdauer wurde das Reaktionsgemisch mit 25 mL Wasser und 25 mL Ethanol versetzt und dann abfiltriert. Das Produkt wurde mit Wasser und Ethanol einmal gewaschen.

### Einführen von Ionenaustauschergruppen

Das obige Produkt wurden in einem 100 mL Dreihalskolben mit 15 mL Dimethylsulfoxid, 15 mL Wasser und 15 mL N-Methylpyrrolidin suspendiert. Das Reaktionsgemisch wurde eine Stunde bei 70°C gerührt, dann abgekühlt und mit 30 mL Essigsäure versetzt. Das Polymer wurde abfiltriert und mit Wasser gewaschen.

### Eliminierung

Das obige Produkt wurde in einem 100 mL Rundkolben in 50 mL Wasser und 7,5 mL 40% (aq) Natriumhydroxidlösung suspendiert und auf 100°C erhitzt. Nach 4 h Reaktionsdauer wurde das Reaktionsgemisch abgekühlt und abfiltriert. Das Produkt wurde zweimal mit Wasser gewaschen und dann nach bekannten Hochdruckpackverfahren in eine 4x100 mm PEEK-Säule gepackt.

### Ausführungsbeispiel 4:

### Oxidation mit Ameisensäure

25,0 g PS/DVB (55% DVB in EVB) wurden in einem 500 mL 3-Halskolben mit Druckausgleich in 188 mL Ameisensäure suspendiert. Es wurden 54 mL 35% Wasserstoffperoxid über einen Tropftrichter langsam hinzugefügt und die Reaktionslösung extern gekühlt. Nach Abklingen der Reaktionswärme wurde für 65h bei Raumtemperatur gerührt. Nach Beendigung der Reaktionszweit wurde die Reaktionsmischung mit Reinstwasser säurefrei gewaschen und anschliessend im Vakuumtrockenschrank bei bis zur Gewichtskonstanz getrocknet. Das Endgewicht betrug 27,78 g.

### Reduktion mit Lithiumaluminiumhydrid

27,64 g des oxidierten, getrockneten Polymers wurden in einem 500 mL 3-Halskolben mit Druckausgleich in 270 mL trockenem Diethylether suspendiert, mit einem Eisbad auf 0 °C gekühlt und unter Rühren vorsichtig 8,8 g Lithiumaluminiumhydrid hinzugegeben. Nach erfolgter Zugabe wurde das Eisbad entfernt und die Reaktionsmischung unter Rühren für 10 h im Rückfluss erhitzt und weitere 24 h bei Raumtemperatur gerührt. Reaktionsabbruch erfolgte mit Hilfe externer Kühlung und Zugabe von Diethylether, Ethylacetat und Reinstwasser. Nach Abreaktion des verbleibenden Hydrids wurde die Reaktionsmischung auf Eis gegeben und unter Rühren mit verdünnter gekühlter Schwefelsäure versetzt. Die Reaktionsmischung wurde mit nachfolgenden Lösungen gewaschen: Wasser, 5%-iger NaOH-Lösung, Wasser, verdünnte Essigsäure, Wasser und Aceton. Der Filterkuchen wurde zur Trockne filtriert und im Trockenschrank getrocknet. Die Ausbeute betrug 26,20 g.

### Umsetzen mit Epichlorhydrin

4,00 g des Polymers wurden in je 20 mL ECH und DMSO suspendiert, 15 min im Ultraschallbad beschallt und anschliessend zwei Mal einem Druckwechsel unterzogen, wobei das Reaktionsgefäss mit Argon wiederbefüllt wurde. Nach Zugabe von 4,30 mL 25% Tetramethylammoniumhydroxid-Lösung in Wasser wurde für 2 h bei Raumtemperatur gerührt. Die Reaktionsmischung wurde filtriert und mit einer 1:1-Mischung aus Wasser und 2-Propanol sowie Aceton gewaschen. Der Filterkuchen wurde bis zur Trockene filtriert.

### Umsetzen mit Butandiol

Das obige Polymer wurde anschliessend bei Raumtemperatur zusammen mit 1,12 g KOH in 40 mL Butandiol suspendiert und anschliessend für 20 h bei 120 °C gerührt. Nach Beendigung der Reaktionszeit wurde die Reaktionsmischung mehrmals mit Wasser und Aceton gewaschen. Das Produkt wurde zur Trockene filtriert. Die Feuchtmasse betrug 13,36 g.

### Beschichtungszyklus: Reaktion mit Epichlorhydrin (ECH)

Das noch feuchte Polymer aus obigem Schritt wurde mit Wasser auf 13,50 g aufgefüllt und 1 mL 1M Tetrabutylammoniumbromid sowie 20 mL ECH hinzugegeben. Anschliessend wurden 10,5 mL 50% NaOH (aq) hinzugegeben und für 5,5 h gerührt. Daraufhin wurde die Reaktionsmischung mit einer 1:1-Mischung aus Wasser und 2-Propanol, sowie Aceton gewaschen. Der Filterkuchen wurde bis zur Trockene filtriert.

### Beschichtungszyklus: Reaktion mit Butandiol

Das obige Polymer wurde bei Raumtemperatur zusammen mit 1,12 g KOH in 40 mL Butandiol suspendiert und anschliessend für 18 h bei 120 °C gerührt. Nach Beendigung der Reaktionszeit wurde die Reaktionsmischung mehrmals mit Wasser und Aceton gewaschen. Das Produkt wurde zur Trockene filtriert. Das Polymer wurde zuletzt vor der weiteren Umsetzung getrocknet. Die Ausbeute betrug 5,66 g.

### Anbringen eines Spacers

2,30 g des obigen Polymers wurden in 6 mL DMSO und 6 mL Butandioldiglycidylether suspendiert und drei Mal einem Druckwechsel ausgesetzt, wobei das Reaktionsgefäss mit Argon wiederbefüllt wurde. Unter Rühren wurden 0,5 mL 1M Tetrabutylammoniumbromid-Lösung sowie 6 mL 0,6M NaOH (aq) hinzugegeben und für 22 h gerührt. Daraufhin wurde die Reaktionsmischung mit einer 1:1-Mischung aus Wasser und 2-Propanol gewaschen und zur Trockene filtriert.

### Einführen von Anionenaustauschergruppen

Das obige Polymer wurde in 5 mL DMSO suspendiert und mit 5 mL Wasser sowie 5 mL N-Methylpyrrolidin versetzt. Anschliessend wurde die Reaktionsmischung für 1 h bei 70 °C gerührt. Reaktionsabbruch erfolgte durch Zugabe von Wasser und verdünnter Essigsäure. Der Filterkuchen wurde anschliessend mit verdünnter Salzsäure, Wasser und Aceton gewaschen. Das erhaltene Polymer wurde bei 60°C im Trockenschrank getrocknet. Die Ausbeute betrug 2,54 g.

### Eliminierung

Das obige Polymer wurde in 50 mL Wasser suspendiert, mit 5 mL 30% NaOH (aq) versetzt und für 2 h bei 100 °C gerührt. Reaktionsabbruch erfolgte durch Filtration und anschliessendem Waschen mit Wasser, verdünnter HCl, Wasser und Aceton. Der Filterkuchen wurde zur Trockene filtriert und das Polymer anschliessend bei 60°C im Trockenschrank getrocknet. Dabei war kein signifikanter Gewichtsverlust zu erkennen.

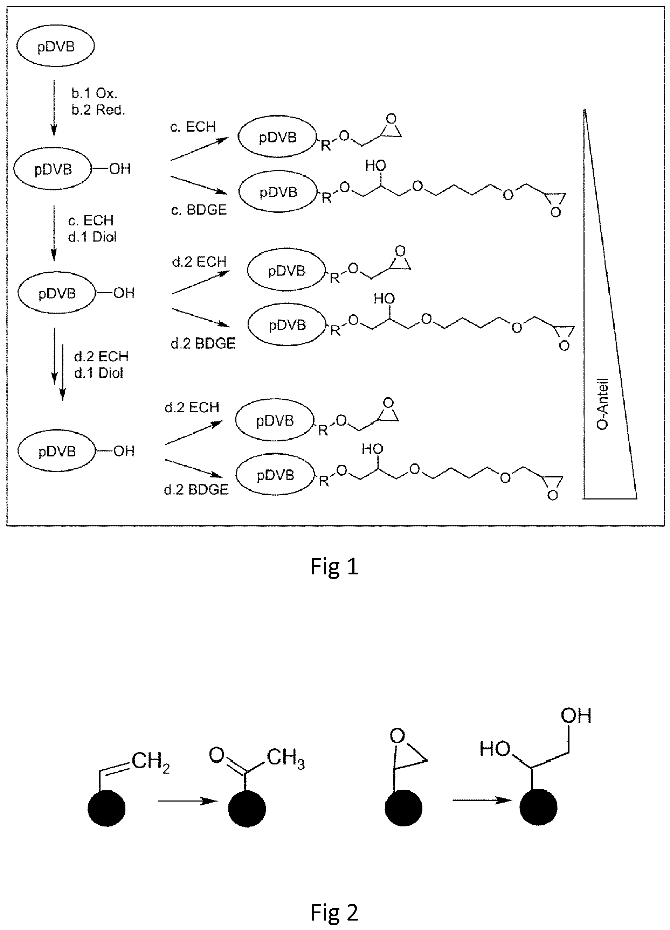

Figur 1 zeigt schematisch verschiedene, beispielhafte Modifizierungssequenzen am Kern-Polymerträgermaterial (pDVB). Nach initialer Oxidation (b.1) und anschliessender Reduktion (alternativ: anschliessender Hydrolyse, b.2) steht ein Polymerträgermaterial bereit, welches an der Oberfläche Hydroxy-Gruppen aufweist (pDVB-OH). Das Polymerträgermaterial aufweisend OH-Gruppen (pDVB-OH) kann sodann mit Epichlorhydrin (ECH) umgesetzt werden. Es resultiert eine Verbindung nach Schritt c. Das Polymerträgermaterial aufweisend OH-Gruppen (pDVB-OH) kann in Schritt c alternativ auch mit Butandioldiglycidylether (BDGE) umgesetzt werden.

Erfindungsgemäss kann das Polymerträgermaterial nach Schritt b.2 in einem oder mehreren Beschichtungszyklen mit ECH, einem Diol und anschliessend erneut mit ECH oder BDGE umgesetzt werden (Schritte c, d.1, d.2). Das Polymerträgermaterial kann nach Schritt b.2 beispielsweise auch direkt mit BDGE umgesetzt werden. Es resultiert ein modifiziertes Polymerträgermaterial aufweisend geeignete reaktive funktionelle Gruppen an der Oberfläche. Im gezeigten Beispiel handelt es sich um Epoxid-Gruppen.

Grundsätzlich sind beliebige Kombinationen von ECH/BDGE-Modifikationen in den Schritten c respektive d.2 und auch beliebige Kombinationen von Diol-Umsetzungen/Hydrolysen in Schritt d.1 denkbar. Wie vorstehend beschrieben ist es jedoch bevorzugt, wenn beim letzten Beschichtungszyklus in d.2 ein Spacermolekül eingefügt wird.

Das in Figur 1 gezeigte modifizierte Polymerträgermaterial eignet sich für das anschliessende Einführen von Ionenaustauschergruppen. Der Sauerstoffanteil an der Oberfläche des modifizierten Polymerträgermaterials erhöht sich in der Reihenfolge der im vorhergehenden Abschnitt aufgelisteten Varianten (in der Figur Varianten von oben nach unten). Wenn in die Produkte jeweils Ionenaustauschergruppen eingeführt werden, resultiert ein Ionenaustauschmaterial, dessen Hydrophilie sich in der Reihenfolge der aufgelisteten Varianten erhöht. Die erhöhte Hydrophilie äussert sich beispielsweise in reduzierter Selektivität σ von NO₃ zu Cl.

Die Figuren 2 bis 6 sollen die erfindungsgemässen Verfahrensschritte illustrieren und zeigen die Reaktionsabläufe stark vereinfacht. Sie erheben keinen Anspruch auf Vollständigkeit. Der Fokus ist auf die jeweilige Modifikation an der Polymerträgermaterialoberfläche gerichtet. Der im betreffenden Schritt jeweils nicht modifizierte Anteil des Polymerträgermaterials ist vereinfacht als sphärischer Partikel gezeigt.

Figur 2 zeigt schematisch Modifizierungsschritte b.1 und b.2. Nach erfolgter Oxidation und Reduktion (alternativ: Hydrolyse) ist ein Polymerträgermaterial aufweisend OH-Gruppen an der Oberfläche bereitgestellt. Es ist dem Fachmann bekannt, dass im Oxidationsschritt nicht nur Ketone entstehen können. Je nach Behandlung und insbesondere bei der Behandlung mit KMnO₄ können neben Ketonen auch Diole, Diketone oder, als Spaltprodukt, Dicarbonsäuren entstehen. Solche Verfahren und Zwischenprodukte sind vom beanspruchten Verfahren erfasst und sollen durch die in den Figuren gezeigten Beispiele nicht ausgeschlossen werden.

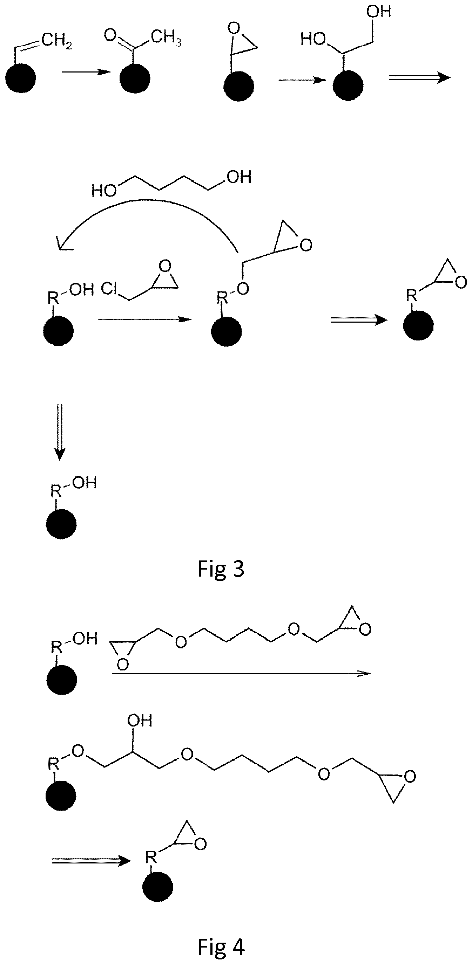

Figur 3 zeigt schematisch Modifizierungsschritte b.1 und b.2, gefolgt von beispielhaften Modifizierungsschritten c und d.1. In der gezeigten Variante ist die in Schritt c verwendete Verbindung, die wenigstens eine erste mit Hydroxygruppen reaktive funktionelle Gruppe und wenigstens eine zweite mit Aminen und/oder Hydroxygruppen reaktive funktionelle Gruppe aufweist, Epichlorhydrin. In der gezeigten Variante ist die in Schritt d.1 verwendete polyfunktionale Verbindung aufweisend Hydroxygruppen Butandiol. Die Beschichtungssequenz bestehend aus der alternierenden Umsetzung mit Epichlorhydrin und Butandiol kann als d.1 und d.2 wiederholt werden. Die resultierenden Partikel werden nach dem Doppelpfeil wiederum abstrahiert dargestellt.

Figur 4 zeigt schematisch einen alternativen Modifizierungsschritt c oder d.2. Die in Schritt c oder d.2 verwendete Verbindung, die wenigstens eine erste mit Hydroxygruppen reaktive funktionelle Gruppe und wenigstens eine zweite mit Ionenaustauschergruppen und/oder Hydroxygruppen reaktive funktionelle Gruppe aufweist, ist BDGE.

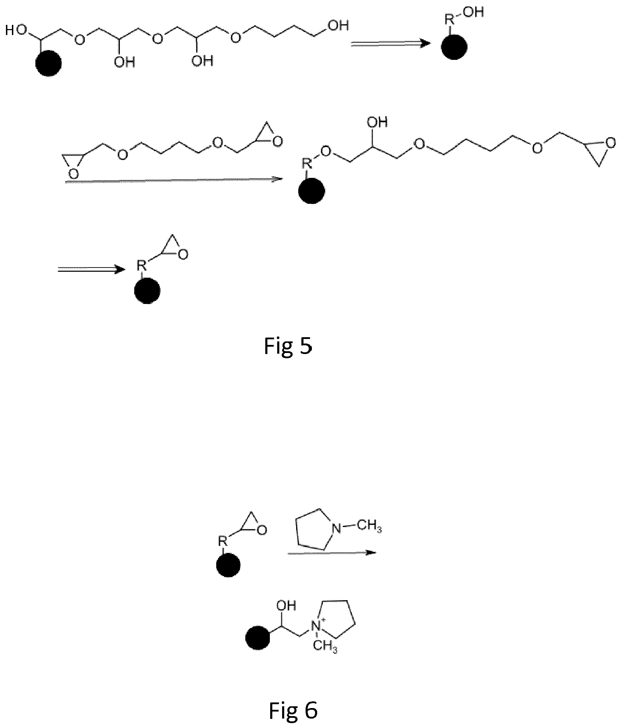

Die Umsetzung mit BDGE kann auch einen oder mehreren Beschichtungszyklen, wie sie in Figur 3 gezeigt sind, abschliessen. Figur 5 zeigt schematisch und beispielhaft das Resultat eines Modifizierungsschritts d.1. Nach Verwendung von ECH in Schritt c, wurden Beschichtungszyklen unter Verwendung von ECH in Schritt d.2 durchgeführt. Nach Umsetzung mit Butandiol wird der letzte Schritt d.2 sodann unter Verwendung von BDGE als Spacer durchgeführt. Es resultiert ein modifiziertes Polymerträgermaterial mit einem Sauerstoffanteil an der Oberfläche, welcher *ceteris paribus* höher ist als bei den nach den Schemata Fig. 3 / Fig. 4 resultierenden Trägermaterialien.

Figur 6 zeigt schematisch ein Beispiel für einen an den Schritt c oder d.2 anschliessenden Modifizierungsschritt e, das Einführen einer Ionenaustauschergruppe. Im gezeigten Beispiel ist die Ionenaustauschergruppe entstanden durch Quarternisierung des 1-Methylpyrrolidins. Nach Durchführen einer erfindungsgemässen Modifizierung resultiert ein Polymerträgermaterial, welches an der Oberfläche Seitenketten wie die beispielhaft gezeigte aufweist.

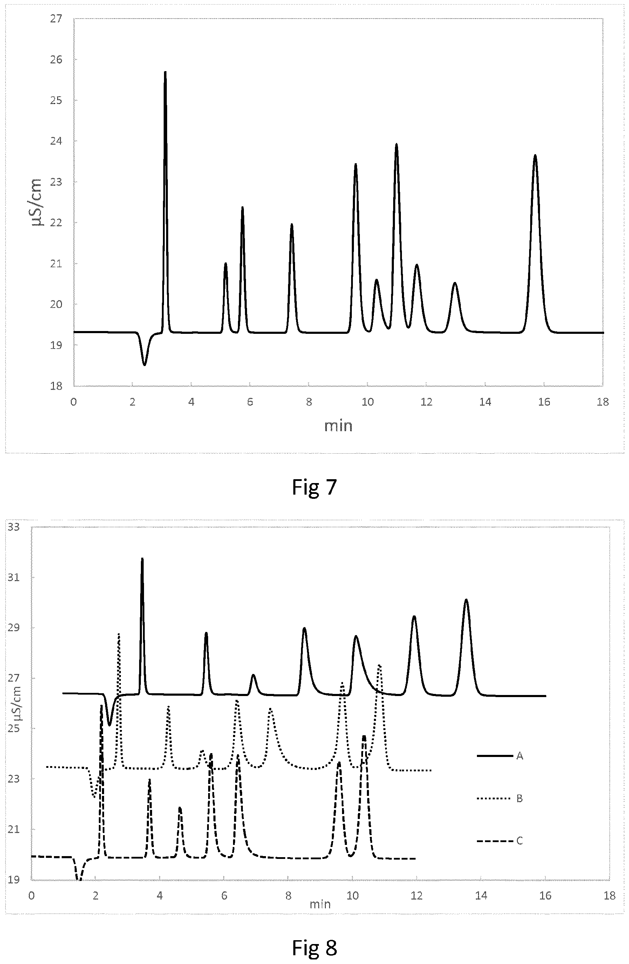

Figur 7 zeigt ein mit einer Chromatographiesäule nach Ausführungsbeispiel 1 oder 4 erhältliches Chromatogramm. Die x-Achse zeigt die Laufzeit in Minuten. Die y-Achse zeigt die Leitfähigkeit in µS/cm. Das getrocknete Substrat wurde hierzu in eine 150x4 mm Säule gepackt. Als Eluent wurde 6.0 mmol/L Na₂CO₃ und 1.0 mmol/L NaHCO₃ verwendet. Die Analyten der Standardlösung liegen basisliniengetrennt zueinander vor, wobei die Elutionsreihenfolge von links nach rechts Fluorid, Bromat, Chlorid, Nitrit, Bromid, Chlorat, Nitrat, Azid, Phosphat, Sulfat ist. Bromat liegt quantifizierbar vor Chlorid (Peaks bei 5.2, 5.7 min Laufzeit) und das Chromatogramm liefert hohen Signalsymmetrien. Die Gesamtlaufzeit der Säule ist mit 15 Minuten kurz. Chromatographiesäulen hergestellt unter den Bedingungen des Ausführungsbeispiels 1 liefern ein vergleichbares Chromatogramm.

Figur 8 zeigt drei Chromatogramme, die mit einer Chromatographiesäule nach Ausführungsbeispiel 4 erhalten wurden. Ausführungsbeispiel 1 liefert sehr ähnliche Chromatogramme. Die x-Achse zeigt die Laufzeit in Minuten. Die y-Achse zeigt die Leitfähigkeit in µS/cm. Die Kurven zeigen Chromatogramme einer identischen Standardlösung, wobei die Elutionsreihenfolge von links nach rechts Fluorid, Chlorid, Nitrit, Bromid, Nitrat, Phosphat und Sulfat ist. Gesteigert wurde (von oben nach unten) die Anzahl Wiederholungen von Modifizierungsschritten d.1/d.2. Bei der ausgezogenen Kurve A wurde die Schrittsequenz d.1/d.2 einmal ausgeführt. Bei der gepunkteten Kurve B wurde die Schrittsequenz d.1 / d.2 zweimal ausgeführt. Bei der strichlierten Kurve C wurde die Schrittsequenz d.1 / d.2 dreimal ausgeführt. Konkret wurde also bei der ausgezogenen Kurve A ein Polymersubstrat verwendet, welches eine oxidative/reduktive Behandlung durchlief, einmal mit ECH und anschliessend einmal mit 1,4-Butandiol behandelt wurde, und hernach mit BDGE umgesetzt wurde. Bei Kurve B wurde ein Polymersubstrat verwendet, welches eine oxidative/reduktive Behandlung durchlief, mit ECH und anschliessend mit 1,4-Butandiol behandelt wurde, danach nochmals mit ECH und anschliessend mit 1,4-Butandiol behandelt wurde, und hernach mit BDGE umgesetzt wurde. Die Kurve C zeigt ein Polymersubstrat, welches eine oxidative/reduktive Behandlung durchlief. Hernach erfolgte folgende Schrittreihenfolge: Umsetzen mit ECH; 1,4-Butandiol; ECH; 1,4-Butandiol; ECH; 1,4-Butandiol; BDGE. In allen drei Fällen wurde das so modifizierte Substrat im Anschluss mit Methylpyrrolidin umgesetzt. Aus den Chromatogrammen ist ersichtlich, dass die Signale der von Tailing betroffenen Anionen (Nitrit, Bromid, Nitrat) mit zunehmender Zahl von Beschichtungszyklen an Symmetrie gewinnen. Die Selektivität σ von NO₃ zu Cl nimmt mit zunehmender Zahl von Beschichtungszyklen ab. Die Gesamtkapazität sinkt.

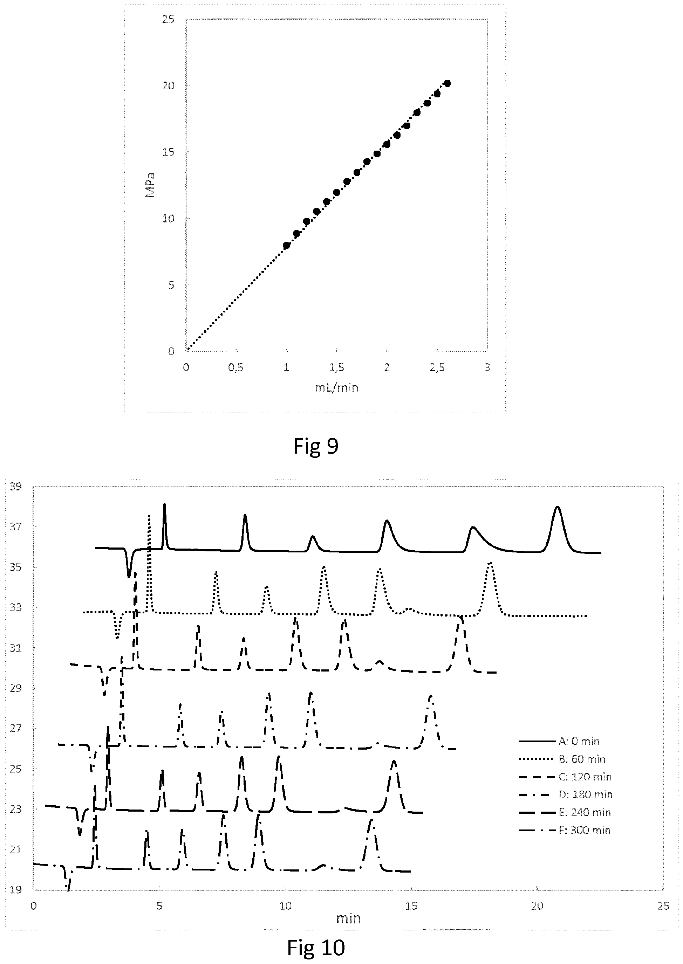

Figur 9 zeigt ein Druck-Fluss Profil gemessen an einer erfindungsgemässen Chromatographiesäule, hergestellt nach Beispiel 4, gemessen bei Raumtemperatur. Die y-Achse zeigt den Systemdruck in MPa. Die x-Achse zeigt die Flussrate in mL/min. Es wurden 17 Intervalle à je 20 Minuten gemessen unter schrittweiser Erhöhung der Flussrate von 1 ml/min bis 2.6 ml/min. Der Druck hängt linear von der Flussrate ab. Dies steht im Gegensatz zu Ergebnissen, welche mit herkömmlichen Säulen, die mit hydrophilem pDVB-Substrat gepackt sind, erhalten werden. Bei herkömmlichen Säulen nimmt der Druck in Abhängigkeit der Flussrate stärker als linear zu. Es kann sich z.B. eine hyperbolische Steigung der Funktion ergeben.

Fig 10 zeigt mit erfindungsgemässen Chromatographiesäulen erhältliche Chromatogramme, insbesondere mit Chromatographiesäulen befüllt mit modifiziertem Polymerträgermaterial nach Ausführungsbeispiel 1 oder 4. Die x-Achse zeigt die Laufzeit in Minuten. Die y-Achse zeigt die Leitfähigkeit in µS/cm. Variiert wurde die Dauer von Schritt f. Das getrocknete Substrat wurde in eine 100x4 mm Säule gepackt. Die Kurven zeigen jeweils das Chromatogramm einer identischen Standardlösung, wobei die Elutionsreihenfolge von links nach rechts Fluorid, Chlorid, Nitrit, Bromid, Nitrat, Phosphat und Sulfat ist. Von oben nach unten zeigen die Kurven die Chromatogramme erhältlich nach Elimination des Säulensubstrats im Schritt f während 0 min (A), 60 min (B), 120 min (C), 180 min (D), 240 min (E) und 300 min (F). Bei Weglassen von Schritt f (0 Minuten) überlagern sich der Nitrat Peak und der Phosphat Peak. Die Gesamtkapazität sinkt mit längerer Eliminationsdauer. Die Analyten liegen basisliniengetrennt zueinander vor und das Chromatogramm liefert hohe Signalsymmetrien. Die Gesamtlaufzeit der Säule ist mit ca. 14 bis 20 Minuten kurz.

## Patentansprüche

1. Verfahren zur Modifizierung eines Polymerträgermaterials für die Verwendung als stationäre Phase in einem analytischen oder präparativen Trennverfahren, umfassend die Schritte
a. Bereitstellen eines Polymerträgermaterials wenigstens teilweise gebildet aus aromatischen Kohlenwasserstoffverbindungen aufweisend mindestens zwei Vinyl- oder Allyl-Substituenten, bevorzugt wenigstens teilweise gebildet aus Divinylbenzol-Monomeren;
b. Erzeugung von Hydroxygruppen auf/im Polymerträgermaterial durch ein Verfahren umfassend die Schritte
b.1 oxidative Behandlung des Polymerträgermaterials, und anschliessend
b.2 reduktive oder hydrolytische Behandlung des Reaktionsproduktes aus Schritt b.1;
c. Reaktion des Produkts aus Schritt b.2. mit einer polyfunktionalen Verbindung, insbesondere einer Verbindung, die
- wenigstens eine erste funktionelle Gruppe, die mit Hydroxygruppen reaktiv ist, bevorzugt eine Halogengruppe,
und
- wenigstens eine zweite funktionelle Gruppe, die mit Aminen und/oder Hydroxygruppen reaktiv ist, bevorzugt eine Epoxidgruppe,
aufweist.

2. Verfahren nach Anspruch 1, wobei auf Schritt c ein Schritt d folgt:
d. Durchführung einer Anzahl Beschichtungszyklen umfassend die Schritte
d.1 Einführen oder Erzeugen von Hydroxygruppen durch Reaktion der zweiten funktionellen Gruppe, bevorzugt der Epoxidgruppe, eingeführt in Schritt c, durch
- Umsetzen mit einer polyfunktionalen Verbindung aufweisend Hydroxygruppen, insbesondere Umsetzen mit einem Polyol, oder
- Hydrolyse, oder
- eine Kombination davon;
d.2 Reaktion des Produkts aus Schritt d.1. mit einer polyfunktionalen Verbindung, insbesondere einer Verbindung die
- wenigstens eine erste funktionelle Gruppe, die mit Hydroxygruppen reaktiv ist, bevorzugt eine Halogengruppe
und
- wenigstens eine zweite funktionelle Gruppe, die mit Aminen und/oder Hydroxygruppen reaktiv ist, bevorzugt eine Epoxidgruppe,
aufweist;
wobei die Anzahl Beschichtungszyklen zwischen 0 und 20 liegt.

3. Verfahren nach Anspruch 1 oder 2, zusätzlich umfassend den Schritt:
e. Einführen von Ionenaustauschergruppen auf dem Reaktionsprodukt aus Schritt c oder d.2.

4. Verfahren nach einem der Ansprüche 1 bis 3, **dadurch gekennzeichnet dass** das Polymerträgermaterial in Schritt a, welches wenigstens teilweise gebildet ist aus aromatischen Kohlenwasserstoffverbindungen aufweisend mindestens zwei Vinyl- oder Allyl-Substituenten, bevorzugt wenigstens teilweise gebildet aus Divinylbenzol-Monomeren, zusätzlich teilweise gebildet ist aus Monomeren ausgewählt aus der Gruppe bestehend aus
- Ethylvinylbenzol,
- Vinylacetat,
- Styrol, sowie
- einer Kombination davon;
wobei der Anteil der aromatischen Kohlenwasserstoffverbindungen aufweisend mindestens zwei Vinyl- oder Allyl-Substituenten, insbesondere der Divinylbenzolanteil, bevorzugt wenigstens 50 Gew.-% beträgt.

5. Verfahren nach einem der Ansprüche 1 bis 4, **dadurch gekennzeichnet, dass** die oxidative Behandlung in Schritt b.1 eine Behandlung mit einer Persäure, bevorzugt ausgewählt aus der Gruppe bestehend aus meta-Chlorperbenzoesäure, Peroxyameisensäure, Peressigsäure, Peroxytrifluoressigsäure, eine Behandlung mit KMnO₄, eine Behandlung mit Sauerstoffplasma oder einer Kombination davon ist.

6. Verfahren nach einem der Ansprüche 1 bis 5, **dadurch gekennzeichnet dass** die in Schritt c verwendete Verbindung, die wenigstens eine erste funktionelle Gruppe, die mit Hydroxygruppen reaktiv ist, und wenigstens eine zweite funktionelle Gruppe, die mit Aminen und/oder Hydroxygruppen reaktiv ist, aufweist, ein Epihalohydrin, insbesondere Epichlorhydrin, ist.

7. Verfahren nach einem der Ansprüche 1 bis 5, wobei die in Schritt c verwendete polyfunktionale Verbindung, die wenigstens eine erste funktionelle Gruppe, die mit Hydroxygruppen reaktiv ist, und wenigstens eine zweite funktionelle Gruppe, die mit Aminen und/oder Hydroxygruppen reaktiv ist, aufweist, ein Spacermolekül, bevorzugt ein Diepoxid, besonders bevorzugt Butandioldiglycidylether, ist.

8. Verfahren nach einem der Ansprüche 2 bis 7, **dadurch gekennzeichnet dass** die in Schritt d.2 verwendete polyfunktionale Verbindung, die wenigstens eine erste funktionelle Gruppe, die mit Hydroxygruppen reaktiv ist, und wenigstens eine zweite funktionelle Gruppe, die mit Aminen und/oder Hydroxygruppen reaktiv ist, aufweist, ein Epihalohydrin oder ein Spacermolekül ist.

9. Verfahren nach einem der Ansprüche 2 bis 8, **dadurch gekennzeichnet dass** die Anzahl Beschichtungszyklen zwischen 0 und 10, bevorzugt zwischen 0 und 5, besonders bevorzugt zwischen 1 und 3 beträgt.

10. Verfahren nach einem der Ansprüche 3 bis 9, **dadurch gekennzeichnet dass** die Ionenaustauschergruppe eingeführt wird durch Reaktion der Verbindung aus Schritt c oder d.2 mit einer elementorganische Verbindung der 5. Hauptgruppe, bevorzugt einem Amin, besonders bevorzugt einem tertiären Amin.

11. Verfahren nach einem der Ansprüche 3 bis 10, **dadurch gekennzeichnet dass** Schritt e gefolgt ist von einem Schritt f, umfassend das Erhitzen des mit Ionenaustauschergruppen versehenen Polymerträgermaterials in alkalischer Lösung.

12. Modifiziertes Polymerträgermaterial für die Verwendung als stationäre Phase in einem analytischen oder präparativen Trennverfahren, insbesondere Chromatographieverfahren, erhältlich durch ein Verfahren nach einem der Ansprüche 1 bis 11.

13. Modifiziertes Polymerträgermaterial nach Anspruch 12, wobei das Material bevorzugt als Partikel, bevorzugt als sphärische Partikel, besonders bevorzugt als sphärische Partikel mit einer durchschnittlichen Partikelgrösse von 1 bis 100 µm, bevorzugt mit einer durchschnittlichen Grösse von 2 bis 50 µm, vorliegt.

14. Chromatographiesäule, insbesondere Ionenaustauschchromatographiesäule, befüllt mit modifiziertem Polymerträgermaterial gemäss einem der Ansprüche 12 bis 13.

15. Verfahren zur chromatographischen Trennung von Analyten, **dadurch gekennzeichnet, dass** eine Lösung enthaltend die Analyten mit modifiziertem Polymerträgermaterial nach einem der Ansprüche 12 bis 13 kontaktiert wird, insbesondere durch eine Chromatographiesäule nach Anspruch 14 geleitet wird.

16. Verwendung des Polymerträgermaterials erhältlich mit dem Verfahren nach einem der Ansprüche 1 bis 11 zur analytischen oder präparativen Trennung von Analyten, insbesondere Verwendung in der Anionenaustauschchromatographie, Kationenaustauschchromatographie und/oder in der HILIC Chromatographie.
